# EUROPÄISCHE PATENTSCHRIFT

(11) **EP 1 635 235 B1**
(45) Veröffentlichungstag und Bekanntmachung des Hinweises auf die Patenterteilung: **18.11.2015**
(21) Anmeldenummer: 05016637.0
(22) Anmeldetag: 30.07.2005
(51) Int. Cl.: G05B 19/042

(54) **Verfahren, Datenträger und System zur elektronischen Steuerung eines Antriebs sowie Antrieb**
Method, data carrier and system for electronic control of a drive unit and drive unit
Procédé, support de données et système de commande électronique d' un entraînement et entraînement

(30) Priorität: 14.09.2004 DE 102004044926
(43) Veröffentlichungstag der Anmeldung: 15.03.2006
(73) Patentinhaber: SEW-EURODRIVE GmbH & Co. KG, 76646 Bruchsal (DE)
(72) Erfinder: Reichle, Robert, 76297 Stutensee (DE)

(56) Entgegenhaltungen:
- EP-A- 0 813 131
- EP-A- 1 435 549
- US-A- 6 118 446
- US-A1- 2001 035 879
- US-A1- 2003 001 896
- US-B1- 6 456 308
- NATIONAL INSTRUMENTS CORPORATION: "LabVIEW Tutorial Manual, PASSAGE" [Online] 31. Januar 1996 (1996-01-31), , XP002430923 Gefunden im Internet: URL:http://www.physics.utoledo.edu/ alukasz/labview_tutorial.PDF> [gefunden am 2007-01-01] * das ganze Dokument *

## Beschreibung

Die Erfindung betrifft ein Verfahren zum Herstellen einer Benutzerschnittstelle, ein Computerprogrammprodukt, einen Antrieb und ein Verfahren zur elektronischen Steuerung eines Antriebs.

Aus der EP 0 813 131 B1 ist eine graphische Benutzerschnittstelle für die Programmierung eines Umrichters bekannt. Dabei ist ein Antrieb, umfassend Elektromotor und Umrichter, mit einem Rechner verbunden, der Anzeigemittel aufweist. Nach Start eines Bedienprogramms auf diesem Rechner ist die Betriebsart des Umrichters auswählbar. Der Bediener kann dort dann durch Anklicken mittels der Maus das Auswählen ausführen und wird danach durch Eingabemasken geführt, die ihm das Eingeben von Parametern ermöglichen, welche bei der Betriebsart notwendig sind. Nachteilig ist dabei, dass der Bediener die graphische Darstellung der Masken nicht für seine Zwecke verändern kann sondern gezwungen wird, die Parameter am Bildschirm dort einzugeben, wo die graphische Benutzerschnittstelle dies von ihm verlangen. Denn zu der graphischen Benutzerstelle gibt es nur einen einzigen Source-Code und nach Kompilierung nur einen einzigen lauffähigen Maschinen-Code. Der Bediener wird dabei also durch Masken und Bilder geführt, die für seine jeweilige konkrete Anlage mit Antrieben nicht wichtig, unbedeutend sind, aber für eine andere Anlage wichtig sind. Auf diese Weise geht viel Zeit verloren beim Parametrieren und Konfigurieren des Umrichters des Antriebs der Anlage.

Der Erfindung liegt daher die Aufgabe zugrunde, die Inbetriebnahme und Wartung von Anlagen zu beschleunigen und/oder zu erleichtern.

Erfindungsgemäß wird die Aufgabe bei der Verfahren zum Herstellen einer Benutzerschnittstelle, nach den in Anspruch 1, und bei dem Antrieb nach den in Anspruch 5 angegebenen Merkmalen gelöst.

Wesentliche Merkmale der Erfindung bei dem Verfahren sind, dass das Verfahren zum Herstellen einer Benutzerschnittstelle für einen Umrichter mittels eines Anzeigemittel umfassenden Rechners geeignet ist,
wobei die Anzeigemittel zur Anzeige von Bildern, wie Masken oder dergleichen, geeignet sind,
wobei die Benutzerschnittstelle einen Source-Code umfasst, nach dessen Start zumindest ein Bild oder eine Bildsequenz anzeigbar ist,
wobei ein oder mehrere Bilder zur Anzeige und/oder Eingabe von Parameterwerten des Umrichters geeignet sind,
wobei mittels der Parameter die Konfiguration des Umrichters bestimmbar ist und/oder mittels Parameter Informationen über Zustandsgrößen des Umrichters oder einer mit diesem verbundenen Komponente erhältlich sind, wobei
- die Ausgestaltung des Bildes oder der Bilder, insbesondere die Anordnung der Elemente innerhalb des jeweiligen Bildes, mit Bedien- und/oder Visualisierungselementen sowie deren Eigenschaften und Funktionen mit einem Design-Programm vorgegeben wird, insbesondere grafisch und textuell,
wobei die Ausgestaltung anpassbar ist an die Maschine oder Anlage, in welcher der Antrieb eingesetzt ist,
- von diesem Design-Programm entsprechende Informationen in eine KonfigurationsDatei abgespeichert werden und
- aus der Konfigurations-Datei ein der graphischen Benutzerschnittstelle zugeordneter Source-Code erzeugt wird,
- aus dem Source-Code von einem Compiler-Programm unter Einlesen und Verwenden der Konfigurations-Datei der ausführbare Maschinen-Code erzeugt wird, wobei der Integrationstyp des Maschinen-Code, wie ablauffähiges Programm oder Plugln für ein übergeordnetes Programm, nach dem Starten des Compiler-Programms vom Bediener durch Eingabemittel des Rechners auswählbar ist,
- nach Starten des ausführbare Maschinen-Code die graphische Benutzerschnittstelle zur Initialisierung oder Konfiguration des Umrichters betriebsbereit ist.

Von Vorteil ist dabei, dass der Bediener die Ausgestaltung der Bilder, der Bildsequenzen selbst an seine Anwendungen anpassen kann. Somit ist eine Benutzerschnittstelle geschaffen, die in einfacher und kostengünstiger Weise erstellbar und designbar ist. Es muss nicht mehr für jede Anwendung eine spezielle Benutzerschnittstelle mit Bildern programmiert werden sondern der Bediener ist selbstständig in der Lage das Design der Benutzerschnittstelle seinen Anforderungen gemäß anzupassen. Das Designen umfasst dabei die Ausführung des Designprogrammes und die zum Designen nach Stand der Technik üblichen Mittel-Verwendungen. Dazu gehören beispielsweise Mittel zum Messen von ergonomischen Daten, wie Kontrast, Farbstärke, Farbart, Abstände, Hintergrundsfarbe und - Helligkeit sowie Gesamthelligkeit. Das Designen ist also fachgerecht ausführbar. Insbesondere sind auch die Reihenfolgen der Mausklicks und der Entfernungen für die Mauspositionen und ähnliche Ausführungsweisen optimal an die jeweilige Anlage anpassbar. Vorteiligerweise wird der zur Benutzerschnittstelle gehörige ausführbare Maschinen-Code mit einem derartigen Compiler-Programm erstellt, dass aus äußerst verschiedenen, den jeweiligen Anwendungen zugeordneten Konfigurations-Dateien der lauffähige Maschinen-Code erzeugbar ist und zwar immer von nur diesem einen Compiler-Programm.

Als Anwendungen sind nicht nur Fließbänder, Hebewerke und Flaschenabfüllanlagen zu sehen sondern jede beliebige industrielle Maschine oder Anlage.

Vorteil der Erfindung ist, dass zwar nur eine grundlegende Software zu erstellen ist, der Bediener aber für seine jeweilige Anwendung sich selbst eine graphische Benutzerschnittstelle designen kann, die dann optimal an die Anforderungen der für den Bediener relevanten Anwendung mit Antrieb anpassbar ist. Insbesondere kann nicht nur die Ergonomie optimiert werden sondern auch die Geschwindigkeit bei der Dateneingabe. Außerdem wird auf diese Weise die Anwendbarkeit der Eingabemittel zum Parametrieren des Umrichters verbessert.

Die Erfindung ermöglicht also dem Bediener freier zu sein als nach Stand der Technik. Mit dieser gewonnenen Flexibilität ist der Bediener in der Lage seine Anlage schneller und effektiver sowie auch ergonomischer zu bedienen, parametrieren oder in Betrieb zu nehmen. Trotz dieser gewonnenen Flexibilität ist kein wesentlich größeres Wissen vom Bediener abverlangt. Denn die Grundstrukturen der Schnittstelle bleiben gleich und werden von Experten des Umrichterherstellers vorgebbar. Nur die Masken und Bilder mit ihren farblichen und/oder schriftartenmäßigen oder schriftgrößenmäßigen Betonungen sind veränderbar.

Beispielsweise ist die Farbe Rot von einem Bediener, der diese Farbe nur schwer erkennen kann, gegen eine andere Farbe austauschbar.

Zusammenfassend ist zu betonen, dass der Bediener im Unterschied zum Stand der Technik bei der Erfindung nicht nur die Parameterwerte für den Umrichter eingibt sondern zuerst Informationen eingibt zum Gestalten des Eingabemittels selbst. Das Anzeigen und die Anzeigemethode ist also änderbar, was somit als technischer Effekt detektierbar ist.

Insbesondere ist bei einem weiter vorteilhaften Ausführungsbeispiel die Schnittstelle auch in einem Umgebung einer Anlagensteuerung integrierbar, wobei dann die Eingabemittel für die Umrichterparameter mit den Eingabemitteln und - methoden für die Anlagenparameter verwoben sind - sogar bis zur beim Anzeigen ununterscheidbaren Integration.

Bei der Erfindung wird also die Anwendung von Bedienmittein, umfassend Rechner und Programme, weitergebildet.

Bei einer vorteilhaften Ausgestaltung weist der Integrationstyp des Maschinen-Code, wie ablauffähiges Programm oder Plugln für ein übergeordnetes Programm, nach dem Starten des Compiler-Programms auswählbar ist. Von Vorteil ist dabei, dass der Maschinen -Code nicht nur unabhängig lauffähig gemacht werden kann sondern als Plugln beispielsweise in andere Programme eingebunden werden kann oder sogar in einen Internet-Browser integriert werden kann.

Bei einer vorteilhaften Ausgestaltung wird die Anzeige und/oder Eingabe von Parameterwerten grafisch oder textuell ausgeführt. Von Vorteil ist dabei, dass die Anzeige-oder Eingabeart sehr variabel ist und für den Bediener somit eine große Flexibilität vorsehbar ist.

Wesentliche Merkmale der Erfindung bei dem Datenträger, also einem Computerprogrammprodukt, sind, dass das auf einen Speicher einer Datenverarbeitungsanlage ladbar ist und einen Programm-Code umfasst, mit dem mindestens eines der genannten Verfahren ausgeführt wird, wenn das Programm auf der Datenverarbeitungsanlage abläuft. Alternativ umfasst das Computerprogrammprodukt einen Maschinen-Code, der von einem ersten Rechner auf einem Datenträger zum Speichern zugeführt ist und von einem zweiten Rechner nach Einspielen oder direkt vom Datenträger aus ausführbar ist.

Von Vorteil ist dabei, dass das Programm mit einer Diskette, mit einer CD oder einem anderen nichtflüchtigen Speicher transportierbar ist.

Wesentliche Merkmale der Erfindung bei dem System sind, dass er zumindest einen Umrichter und einen Elektromotor umfasst, wobei beim Betreiben einer zugeordneten graphischen Benutzerschnittstelle Daten zwischen einem der Benutzerschnittstelle zugeordneten Rechner und dem Umrichter austauschbar sind. Von Vorteil ist dabei, dass ein leistungsfähiger Rechner verwendbar ist, wobei der Umrichter nur einen weniger leistungsfähigen Mikrocontroller mit geringem Speicher umfasst. In Weiterbildung ist aber der Rechner auch im Umrichter integriert ausgeführt, also der Umrichter selbst mit einer so großen Rechenleistung ausgestattet, dass er den Maschinen-Code und/oder sogar das Design-Programm ausführen kann und die Anzeigemittel aufweist oder mit solchen zum Datenaustausch, vorzugsweise per Infrarot, verbindbar ist, beispielsweise Handys mit Display.

Wesentliche Merkmale bei dem Verfahren zur elektronischen Steuerung eines Antriebs sind, dass bei dem Verfahren eine Steuerungs- bzw. Visualisierungs- und Bedienanwendung in einer Anwendungs-Entwicklungsumgebung entwickelt wird, Konfigurationsparameter, welche die Eigenschaften und Funktionen der Steuerungsanwendung repräsentieren, in eine Konfigurationsdatei exportiert werden, wobei die weiteren Schritte, bei denen die Konfigurationsparameter aus der Konfigurationsdatei in ein Quelltext-Erzeugungsumgebung importiert werden, ein Erzeugungsmodul der Quelltext-Erzeugungsumgebung aus den Konfigurationsparametern mindestens eine Quelltext-Datei erzeugt, in der die Eigenschaften und Funktionen der Steuerungsanwendung als Anweisungen gemäß einer vorgegebenen Quellsprache repräsentiert sind, die Quelltext-Datei in einer Kompilierumgebung durch einen Compiler kompiliert wird, wobei eine ausführbare Datei erzeugt wird, die ausführbare Datei auf einer Steuerungseinrichtung installiert wird, die mit dem Antrieb verbunden ist, um diese zu steuern, die Steuerungseinrichtung mittels der Steuerungsanwendung den Antrieb steuert. Von Vorteil ist dabei, dass der Bediener die Ausgestaltung der Bilder, der Bildsequenzen selbst an seine Anwendungen anpassen kann. Somit ist eine Benutzerschnittstelle geschaffen, die in einfacher und kostengünstiger Weise erstellbar ist. Auch die obengenannten Vorteile treffen wiederum gleichermaßen zu.

Bei einer vorteilhaften Ausgestaltung erstellt der Compiler die ausführbare Datei als Stand-Alone-Anwendung und/oder als Plugin-Anwendung. Von Vorteil ist dabei, dass eine hohe Flexibilität gegeben ist und wahlweise völlig verschieden ausführbare Programme erzeugbar sind.

Wesentliche Merkmale des Verfahren zur elektronischen Steuerung des Antriebs eines Systems sind, dass eine Steuerungs- bzw. Visualisierungs- und Bedienanwendung in einer Anwendungs-Entwicklungsumgebung entwickelt wird,
Konfigurationsparameter, welche die Eigenschaften und Funktionen der Steuerungsanwendung repräsentieren, in eine Konfigurationsdatei exportiert werden,
**und** die weiteren Schritte umfasst sind, bei denen
- die Konfigurationsparameter aus der Konfigurationsdatei in ein Quelltext-Erzeugungsumgebung importiert werden,
- ein Erzeugungsmodul der Quelltext-Erzeugungsumgebung aus den Konfigurationsparametern mindestens eine Quelltext-Datei erzeugt, in der die Eigenschaften und Funktionen der Steuerungsanwendung als Anweisungen gemäß einer vorgegebenen Quellsprache repräsentiert sind,
- die Quelltext-Datei in einer Kompilierumgebung durch einen Compiler kompiliert wird, wobei eine ausführbare Datei erzeugt wird,
- die ausführbare Datei auf einer Steuerungseinrichtung installiert wird, die mit dem Antrieb verbunden ist, um diese zu steuern,
- die Steuerungseinrichtung mittels der Steuerungsanwendung den Antrieb steuert.

Vorteiligerweise ist also die Steuerungseinrichtung der Anlage mit der ausführbaren Datei versehen, die wiederum die vom Bediener designbare Schnittstelle enthält und somit an die Anlage optimiert anpassbar ist. Auf diese Weise ist also die graphische Benutzerschnittstelle der Steuerungseinrichtung mit der graphischen Benutzerschnittstelle des Umrichters verschmolzen und zu einer Einheit ausbildbar. Nur wegen der Designbarkeit der Bilder der Umrichterschnittstelle ist dann eine völlig ergonomisch und gut durchdachte effektive Integrierbarkeit der Schnittstellen ineinander ausführbar.

Bei einer vorteilhaften Ausgestaltung weist das Verfahren zur Steuerung einer Mehrzahl von Antrieben durch eine Mehrzahl von Steuerungseinrichtungen, die auf unterschiedlichen Plattformen basieren, mittels der Steuerungsanwendung, die Kompilierumgebung eine Mehrzahl von Compilern zur Erzeugung von an unterschiedliche Plattformen angepasste ausführbare Dateien aufweist, und es wird der verwendete Compiler vor dem Schritt des Kompilierens aus der Mehrzahl von Compilern ausgewählt. Von Vorteil ist dabei, dass bei einer großen industriellen Anlage, in welcher viele verschiedenartig betreibbare Antriebe vorgesehen sind und die verschiedene Betriebssysteme benutzen, trotzdem in der einfachen erfindungsgemäßen Weise ausführbare Programme erzeugbar sind und in die ablaufenden Steuer- und Regelverfahrensprogramme der Anlage integrierbar sind, insbesondere in Echtzeit. Somit können Updates und andere Verbesserungen schnell und einfach erzeugt werden und dann in die bestehende Umgebung sehr schnell integriert werden.

Insbesondere ist dies auch über zwischengeschaltete Bussystemverbindungen und/oder Internetverbindungen vorsehbar.

Bei einer vorteilhaften Ausgestaltung wird die Quelltext-Datei durch mindestens zwei Compiler kompiliert, wobei zwei ausführbare Dateien, angepasst an unterschiedliche Plattformen, erzeugt werden. Von Vorteil ist dabei, dass für zwei oder mehr verschiedenartige Plattformen ausführbarer Maschinen-Code erzeugbar ist und in die zu den jeweiligen Plattformen zugehörigen Systeme integrierbar sind.

Bei einer vorteilhaften Ausgestaltung weist die Quälltext-Erzeugungsumgebung eine Mehrzahl von Erzeugungsmodulen zur Erzeugung von Quelltexten gemäß einer Mehrzahl von Quellsprachen auf. Von Vorteil ist wiederum, dass das erfindungsgemäße Verfahren bei Systemen und Anlagen verwendbar ist, die nicht nur eine Quellsprache umfassen sondern sogar mehrere.

Bei einer vorteilhaften Ausgestaltung ist die Steuerungseinrichtung mit mindestens einem weiteren Antrieb verbunden, um diese parallel zu steuern, und die ausführbare Datei auf der Steuerungseinrichtung installiert wird, ohne dass die Steuerung des weiteren Antriebs beeinträchtigt wird. Von Vorteil ist dabei, dass der Austausch in Echtzeit ausführbar ist. Somit werden Produktionsabläufe in der Anlage ungestört weiter betreibbar.

Weitere Vorteile ergeben sich aus den Unteransprüchen.

In der vorliegenden Anmeldung wird unter Source-Code ein Quelltext verstanden. Solche Texte sind für Menschen lesbar in einer Programmiersprache, beispielsweise einer Hochsprache wie Basic, C, Pascal, Fortran, C+ oder C++. Nach Kompilierung entsteht daraus ein ablauffähiger Maschinen-Code.

In der vorliegenden Anmeldung wird ein Datenträger mit hierauf gespeichertem Computerprogramm auch als Computerprogrammprodukt bezeichnet. Als konkretes Beispiel sei hierzu eine Diskette oder eine CD oder eine DVD-ROM erwähnt.

### Bezugszeichenliste

- 1: Designprogramm
- 2: Konfigurations-Datei, exportiert
- 3: Quellcode-Datei, die erzeugt ist aus dem ApplicationBuilder, für welchen die Konfigurationsdatei importiert wird
- 4: kompilierter lauffähiger Benutzerschnittstellen-Programmcode

Die Erfindung wird nun anhand von Abbildungen näher erläutert:

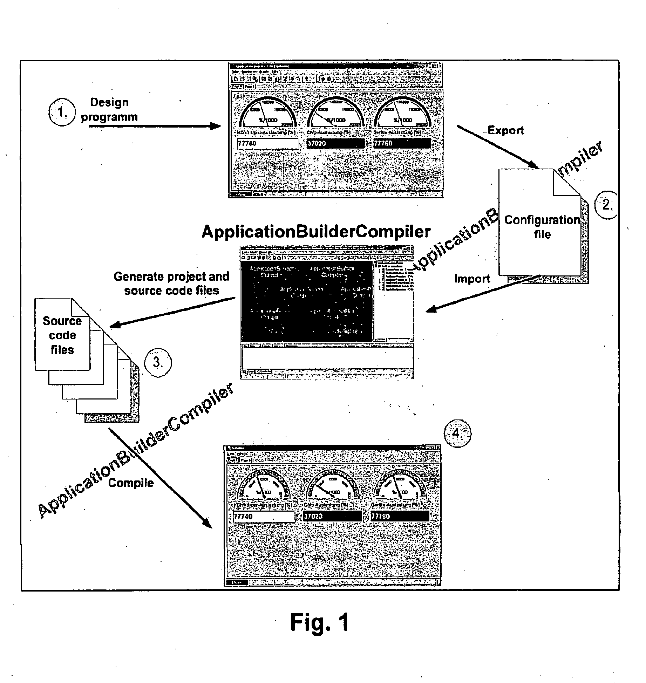

In der Figur 1 ist das erfindungsgemäße Verfahren skizziert.

Der Bediener startet an einem Rechner das erfindungsgemäße Design-Programm. Dabei ist jeder beliebige Rechner verwendbar. Innerhalb des Design-Programms erstellt der Bediener die von ihm gewünschten Masken in der von ihm gewünschten Art.

Beispielsweise sind für einen Antrieb, der ein Fließband antreibt, andere Masken vorteilig als für einen Antrieb, der ein Hubwerk antreibt. Denn die für die jeweilige Anwendung des Antriebs jeweils notwendigen Parameter und Ablaufsteuerungsprogramme sind verschieden. Daher sind auch verschiedene Masken, also graphische Bildschirmdarstellungen, vorteilhaft.

Der Bediener kann also beispielsweise die Farben und Umrandungsarten, Schraffuren und dergleichen grafische Ausführungsarten der jeweiligen Maske erstellen. Er legt also die Position von Eingabeboxen und/oder grafischen Darstellungen fest, beispielsweise wählt er links oben innerhalb der Maske eine Eingabebox und sieht eine rote Schriftfarbe vor, wobei die Schriftgröße sehr groß gewählt ist, und unten rechts innerhalb der Maske eine zugehörige grafische Darstellung. Außerdem sind auch grafische Darstellungen von in Eingabeboxen vorgesehenen Werten ermöglicht. Darüber hinaus ist der jeweiligen Eingabebox beispielsweise ein Parameter des Umrichters zuordenbar.

Ein konkretes Beispiel für eine erzeugbare Maske ist in der Figur 6 der EP 0 813 131 B1 gezeigt. Dort sind 4 Eingabeboxen und eine zugehörige grafische Darstellung gezeigt. Mittels der vorliegenden Erfindung kann aber nun der Bediener die Eingabeboxen beispielsweise größer darstellen lassen und links unten nebeneinander positionieren. Er kann auch Elemente, wie die grafische Darstellung oder Eingabebox, blinken lassen oder mit akustischen Effekten verknüpfen.

Das Design-Programm erstellt eine Konfigurationsdatei, die nach Fertigstellung der Masken exportiert wird und dann einem Compiler-Programm, also dem ApplicationBuilder, zur Verfügung gestellt wird. Die Konfigurationsdatei wird also von diesem Compiler-Programm importiert. Dieses Compiler-Programm erzeugt ein Maschinen-Code, der eine ausführbare Datei, also beispielsweise eine exe-Datei, also eine übliche allein für sich auf dem vorhandenen Betriebssystem, wie beispielsweise ein Microsoft-Windows-Betriebssystem, lauffähige Datei oder wahlweise ein Plugln, also ein für sich selbst nicht lauffähiger, in ein anderes lauffähiges Programm zu integrierender Programmcode.

Vorteiligerweise wird der Maschinen-Code nach der Beendigung des Erstellens der Masken mit dem Bedien-Programm und nach Auslösen, beispielsweise durch Mausklick auf ein Symbol, automatisch erzeugt.

Mit Starten des Maschinen-Codes läuft das erzeugte Bedienprogramm ab und der Rechner bringt am Bildschirm die gewählten Masken nacheinander zur Ansicht. Die Reihenfolge ist in einem ersten erfindungsgemäßen Ausführungsbeispiel vorgegeben abhängig von der Eingaben des Bedieners. Es liegt also eine geführte Eingabe vor. Bei einem zweiten erfindungsgemäßen Ausführungsbeispiel wird die Reihenfolge beim Designen vorgebbar. Somit ist eine an die Anwendung, also Anlage mit Antrieben, optimierte Ausführung möglich.

Unter Umrichter werden in der vorliegenden Schrift nicht nur Umrichter sondern auch alle programmierbaren und/oder parametrierbaren Antriebs- und/oder Motor-Steuerungen bezeichnet.

Unter Rechner sind PC, Laptop, Computer und dergleichen zu verstehen.

Umrichter und Rechner sind nicht nur direkt sondern bei weiteren Ausführungsformen über Internet und/oder Bus verbunden.

Das Verfahren ist auch bei einer Anlage mit mehreren Umrichtern und/oder Rechnern verwendbar, die verschiedene Betriebssysteme, Quellsprachen und dergleichen umfassen. Wesentlicher Vorteil ist, dass die erzeugten ausführbaren Programmcodes schnell und einfach integrierbar sind in die bestehende komplexe Software-Umgebung der Anlage. Auf diese Weise sind Updates echtzeitfähig möglich, also ohne die Produktionsabläufe zu stören.

## Patentansprüche

1. Verfahren zur Inbetriebnahme und/oder zum Parametrieren eines Antriebes, umfassend zumindest einen Umrichter und einen Elektromotor,
wobei der Antrieb mit zumindest einem Rechner zum Datenaustausch verbunden ist,
wobei der Rechner eine graphische Benutzerschnittstelle umfasst, die Anzeigemittel umfasst,
wobei Daten zwischen dem der Benutzerschnittstelle zugeordneten Rechner und dem Umrichter ausgetauscht werden, währenddessen der Rotor des Elektromotors dreht und/oder ruht,
wobei der Rechner Mittel zum Herstellen der Benutzerschnittstelle umfasst,
wobei die Anzeigemittel zur Anzeige von Bildern, wie Masken oder dergleichen, geeignet sind,
wobei die Benutzerschnittstelle einen ausführbaren Maschinen-Code umfasst, nach dessen Start zumindest ein Bild, mehrere Bilder oder eine Bildsequenz mittels der Anzeigemittel anzeigbar sind,
wobei ein oder mehrere Bilder Elemente zur graphischen und/oder textuellen Anzeige und zur Eingabe von Parameterwerten des Umrichters umfassen,
wobei mittels der Parameter die Konfiguration des Umrichters bestimmbar ist und/oder mittels Parameter Informationen über Zustandsgrößen des Umrichters oder einer mit diesem verbundenen Komponente erhältlich sind,
**dadurch gekennzeichnet, dass**
- die Ausgestaltung des Bildes oder der Bilder, insbesondere die Anordnung der Elemente innerhalb des jeweiligen Bildes, mit Bedien- und/oder Visualisierungselementen sowie deren Eigenschaften und Funktionen mit einem Design-Programm vorgegeben wird, insbesondere grafisch und textuell,
wobei die Ausgestaltung anpassbar ist an die Maschine oder Anlage, in welcher der Antrieb eingesetzt ist,
- von diesem Design-Programm entsprechende Informationen in eine Konfigurations-Datei abgespeichert werden und
- aus der Konfigurations-Datei ein der graphischen Benutzerschnittstelle zugeordneter Source-Code erzeugt wird,
- aus dem Source-Code von einem Compiler-Programm unter Einlesen und Verwenden der Konfigurations-Datei der ausführbare Maschinen-Code als Plugln für ein übergeordnetes Programm erzeugt wird,
- nach Starten des ausführbaren Maschinen-Code die graphische Benutzerschnittstelle zur Initialisierung oder Konfiguration des Umrichters betriebsbereit ist,
wobei der als Plugln ausgeführte Maschinencode vom übergeordneten Programm nach dem Start dieses Programmes zur Aktualisierung einer Version eines vorher aufgerufenen Pluglns für eine vorhergehende Version der graphischen Benutzerschnittstelle während der Betriebszeit einer Anlage aufgerufen wird.

2. Verfahren nach mindestens einem der vorangegangenen Ansprüche,
**dadurch gekennzeichnet, dass**
der Rechner mit dem Umrichter über ein Bussystem und/oder das Internet verbunden wird zur Datenübertragung.

3. Verfahren nach mindestens einem der vorangegangenen Ansprüche,
**dadurch gekennzeichnet, dass**
bei zumindest einem Bild die grafische Anzeige mit den textuell eingebbaren Werten gleichzeitig in Übereinstimmung gebracht wird, also bei Änderung von Werten die Grafik angepasst wird und/oder bei Verändern der Grafik mit Maus, berührungssensitivem Bildschirm oder dergleichen, die textuellen Werte verändert werden.

4. Datenträger mit Mitteln zum Speichern von Informationen,
**dadurch gekennzeichnet,**
**dass** die Mittel zum Speichern von Informationen in einem derartigen physikalischen Zustand gebracht sind, dass die gespeicherte Information einen ausführbaren Maschinen-Code für eine Benutzerschnittstelle, der nach einem Verfahren nach mindestens einem der vorangegangenen Ansprüche hergestellt ist, umfasst,
wobei
die gespeicherte Information von einem ersten Rechner auf den Datenträger zum Speichern zugeführt ist und von einem zweiten Rechner nach Einlesen des Datenträgers oder direkt vom Datenträger aus ausführbar ist, insbesondere mittels der vom Datenträger umfassten computerlesbaren Programmmittel.

5. System, das mindestens einen Rechner und einen Antrieb, umfassend zumindest einen Umrichter und einen Elektromotor, umfasst,
wobei
zur Inbetriebnahme und/oder zur Konfiguration und/oder zum Parametrieren des Antriebes, der Antrieb mit zumindest dem Rechner zum Datenaustausch verbunden ist,
wobei der Rechner eine graphische Benutzerschnittstelle umfasst, die Anzeigemittel umfasst,
wobei Daten zwischen dem der Benutzerschnittstelle zugeordneten Rechner und dem Umrichter ausgetauscht werden, währenddessen der Rotor des Elektromotors dreht und/oder ruht,
wobei der Rechner Mittel zum Herstellen der Benutzerschnittstelle umfasst,
wobei die Anzeigemittel zur Anzeige von Bildern, wie Masken oder dergleichen, geeignet sind,
wobei die Benutzerschnittstelle einen ausführbaren Maschinen-Code umfasst, nach dessen Start zumindest ein Bild, mehrere Bilder oder eine Bildsequenz anzeigbar ist,
wobei ein oder mehrere Bilder Elemente zur graphischen und/oder textuellen Anzeige und zur Eingabe von Parameterwerten des Umrichters umfassen,
wobei mittels der Parameter die Konfiguration des Umrichters bestimmbar ist und/oder mittels Parameter Informationen über Zustandsgrößen des Umrichters oder einer mit diesem verbundenen Komponente erhältlich sind,
**dadurch gekennzeichnet,**
- **dass** die Ausgestaltung des Bildes oder der Bilder, insbesondere die Anordnung der Elemente innerhalb des jeweiligen Bildes, mit Bedien- und/oder Visualisierungselementen sowie deren Eigenschaften und Funktionen mit einem Mittel zum Designen, umfassend Mittel zum Ausführen eines Design-Programms, vorgebbar ist, insbesondere grafisch und textuell;
- **dass** von diesen Mitteln entsprechende Informationen in eine Konfigurations-Datei abspeicherbar sind,
- **dass** weitere Mittel zum Erzeugen von der graphischen Benutzerschnittstelle zugeordnetem Source-Code aus der Konfigurations-Datei vorgesehen sind,
- **dass** aus dem Source-Code mit Mitteln zum Kompilieren unter Einlegen und Verwenden der Konfigurations-Datei der ausführbare Maschinen-Code als Plugln für ein übergeordnetes Programm erzeugbar ist,
- **dass** nach Betätigung von Mitteln zum Starten des ausführbare Maschinen-Code die graphische Benutzerschnittstelle zur Initialisierung oder Konfiguration des Umrichters betriebsbereit ist
- und **dass** der als Plugin ausgeführte Maschinencode vom übergeordneten Programm nach dem Start dieses Programmes zur Aktualisierung einer Version eines vorher aufgerufenen Plugins für eine vorhergehende Version der graphischen Benutzerschnittstelle während der Betriebszeit einer Anlage aufrufbar ist.

6. System nach Anspruch 5,
**dadurch gekennzeichnet, dass**
der Rechner im Umrichter integriert ausgeführt ist, also das Gehäuse des Umrichters auch das Gehäuse des Rechners ist.

7. System nach Anspruch 5,
**dadurch gekennzeichnet, dass**
mittels des Rechners das Verfahren nach einem der Ansprüche 1 bis 4 ausführbar ist.

## Claims

1. Method for the startup and/or parameterisation of a drive, comprising at least one converter and one electric motor,
wherein the drive is connected to at least one computer for data exchange,
wherein the computer comprises a graphical user interface which comprises display means,
wherein data is exchanged between the computer, associated with the user interface, and the converter, during which the rotor of the electric motor rotates and/or is stationary,
wherein the computer comprises means for producing the user interface,
wherein the display means are suitable for displaying images, such as masks or the like,
wherein the user interface comprises an executable machine code, after the starting of which at least one image, a plurality of images or an image sequence are displayable by means of the display means,
wherein one or a plurality of images comprise elements for graphical and/or textual display and for inputting parameter values of the converter,
wherein by means of the parameters the configuration of the converter is determinable and/or by means of parameters information about state variables of the converter or of a component connected to the latter is available,
**characterised in that**
- the design of the image or images, in particular the arrangement of the elements within the respective image, is preset using operating elements and/or visualisation elements and also their properties and functions with a design program, in particular graphically and textually, wherein the design is adaptable to the machine or system in which the drive is used,
- corresponding information is stored in a configuration file by this design program and
- a source code associated with the graphical user interface is generated from the configuration file,
- the executable machine code is generated as a plugin for a higher-order program from the source code by a compiler program by reading in and using the configuration file,
- after starting the executable machine code, the graphical user interface is operationally ready for initialisation or configuration of the converter, wherein the machine code formed as a plugin is called by the higher-order program, after the starting of this program, for updating a version of a previously called plugin for a preceding version of the graphical user interface during the operating time of a system.

2. Method according to at least one of the preceding claims,
**characterised in that**
the computer is connected to the converter via a bus system and/or the Internet for data transfer.

3. Method according to at least one of the preceding claims,
**characterised in that**
in the case of at least one image, the graphical display is simultaneously matched to the textually inputtable values, thus on changing values the graphics are adapted and/or on changing the graphics by mouse, touch-sensitive screen or the like, the textual values are changed.

4. Data carrier having means for storing information,
**characterised in that**
the means for storing information are brought into such a physical state that the stored information comprises an executable machine code for a user interface which is produced according to a method according to at least one of the preceding claims,
wherein
the stored information is fed by a first computer onto the data carrier for storage and is executable by a second computer after reading the data carrier or directly from the data carrier, in particular by means of the computer-readable program means comprised by the data carrier.

5. System which comprises at least one computer and one drive, comprising at least one converter and one electric motor,
wherein
for the startup and/or configuration and/or parameterisation of the drive, the drive is connected to at least the computer for data exchange,
wherein the computer comprises a graphical user interface which comprises display means,
wherein data is exchanged between the computer, associated with the user interface, and the converter, during which the rotor of the electric motor rotates and/or is stationary,
wherein the computer comprises means for producing the user interface,
wherein the display means are suitable for displaying images, such as masks or the like,
wherein the user interface comprises an executable machine code, after the starting of which at least one image, a plurality of images or an image sequence is displayable, wherein one or a plurality of images comprise elements for graphical and/or textual display and for inputting parameter values of the converter,
wherein by means of the parameters the configuration of the converter is determinable and/or by means of parameters information about state variables of the converter or of a component connected to the latter is available, **characterised**
- **in that** the design of the image or images, in particular the arrangement of the elements within the respective image, is presettable using operating elements and/or visualisation elements and also their properties and functions with a means for designing, comprising means for executing a design program, in particularly graphically and textually;
- **in that** corresponding information is storable in a configuration file by these means,
- **in that** further means are provided for generating source code, associated with the graphical user interface, from the configuration file,
- **in that** the executable machine code is generatable as a plugin for a higher-order program from the source code by means for compiling by reading in and using the configuration file,
- **in that** after actuation of means for starting the executable machine code, the graphical user interface is operationally ready for initialisation or configuration of the converter,
- and **in that** the machine code formed as a plugin is callable by the higher-order program, after the starting of this program, for updating a version of a previously called plugin for a preceding version of the graphical user interface during the operating time of a system.

6. System according to Claim 5,
**characterised in that**
the computer is formed integrated in the converter, thus the housing of the converter is also the housing of the computer.

7. System according to Claim 5,
**characterised in that**
the method according to one of Claims 1 to 4 is implementable by means of the computer.

## Revendications

1. Procédé de mise en service et/ou de paramétrage d'un entraînement comprenant au moins un variateur et un moteur électrique,
l'entraînement étant relié au moins à un ordinateur pour échanger des données,
l'ordinateur comprenant une interface utilisateur graphique qui comprend des moyens d'affichage,
des données étant échangées entre l'ordinateur associé à l'interface utilisateur et le variateur pendant que le rotor du moteur électrique tourne et/ou est à l'arrêt,
l'ordinateur comprenant des moyens pour produire l'interface utilisateur,
les moyens d'affichage étant aptes à afficher des images, telles que des masques ou analogues,
l'interface utilisateur comprenant un code machine exécutable, après le démarrage duquel au moins une image, plusieurs images ou une séquence d'images peuvent être affichées à l'aide des moyens d'affichage,
une ou plusieurs images comprenant des éléments pour l'affichage graphique et/ou textuel et/ou pour l'entrée de valeurs de paramètres du variateur,
les paramètres permettant de déterminer la configuration du variateur et/ou d'obtenir des informations sur des grandeurs d'état du variateur ou d'un composant relié à celui-ci,
**caractérisé en ce que**
- la configuration de l'image ou des images, en particulier la disposition des éléments à l'intérieur de l'image respective, avec des éléments de commande et/ou de visualisation ainsi que leurs propriétés et fonctions, est prédéfinie par un programme de conception, en particulier graphique et textuelle,
la configuration étant adaptable à la machine ou à l'installation dans laquelle l'entraînement est utilisé,
- des informations correspondantes sont enregistrées par ce programme de conception dans un fichier de configuration et
- un code source associé à l'interface utilisateur graphique est généré à partir du fichier de configuration,
- le code machine exécutable est généré sous la forme d'un plugin pour un programme supérieur à partir du code source par un programme de compilation en lisant et utilisant le fichier de configuration,
- après démarrage du code machine exécutable, l'interface utilisateur graphique est prête à être utilisée pour initialiser ou configurer le variateur,
le code machine exécuté sous la forme d'un plugin étant appelé par le programme supérieur, après le démarrage de ce programme, pour actualiser une version d'un plugin précédemment appelé pour une version précédente de l'interface utilisateur graphique pendant le temps de fonctionnement d'une installation.

2. Procédé selon au moins l'une des revendications précédentes,
**caractérisé en ce que**
l'ordinateur est relié au variateur par un système de bus et/ou par Internet pour la transmission de données.

3. Procédé selon au moins l'une des revendications précédentes,
**caractérisé en ce que**
sur au moins une image, l'affichage graphique est en même temps mis en adéquation avec les valeurs pouvant être entrées sous forme textuelle, c'est-à-dire que le graphique est adapté en cas de modification de valeurs et/ou que les valeurs textuelles sont modifiées en cas de modification du graphique avec une souris, un écran tactile ou analogue.

4. Support de données avec des moyens de mémorisation d'informations,
**caractérisé en ce**
**que** les moyens de mémorisation d'informations sont mis dans un tel état physique que l'information mémorisée comprend un code machine exécutable pour une interface utilisateur qui est produite selon un procédé selon au moins l'une des revendications précédentes,
dans lequel
l'information mémorisée est amenée par un premier ordinateur sur le support de données de mémorisation et peut être exécutée par un deuxième ordinateur après lecture du support de données ou directement à partir du support de données, en particulier à l'aide des moyens formant programme lisibles par ordinateur compris par le support de données.

5. Système qui comprend au moins un ordinateur et un entraînement comprenant au moins un variateur et un moteur électrique,
dans lequel
pour la mise en service et/ou pour la configuration et/ou pour le paramétrage de l'entraînement, l'entraînement est relié au moins à l'ordinateur pour échanger des données,
l'ordinateur comprenant une interface utilisateur graphique qui comprend des moyens d'affichage,
des données étant échangées entre l'ordinateur associé à l'interface utilisateur et le variateur pendant que le rotor du moteur électrique tourne et/ou est à l'arrêt, l'ordinateur comprenant des moyens pour produire l'interface utilisateur,
les moyens d'affichage étant aptes à afficher des images, telles que des masques ou analogues,
l'interface utilisateur comprenant un code machine exécutable, après le démarrage duquel au moins une image, plusieurs images ou une séquence d'images peuvent être affichées,
une ou plusieurs images comprenant des éléments pour l'affichage graphique et/ou textuel et/ou pour l'entrée de valeurs de paramètres du variateur,
les paramètres permettant de déterminer la configuration du variateur et/ou d'obtenir des informations sur des grandeurs d'état du variateur ou d'un composant relié à celui-ci,
**caractérisé en ce**
- **que** la configuration de l'image ou des images, en particulier la disposition des éléments à l'intérieur de l'image respective, avec des éléments de commande et/ou de visualisation ainsi que leurs propriétés et fonctions, peut être prédéfinie par un moyen de conception comprenant des moyens pour exécuter un programme de conception, en particulier graphique et textuelle ;
- **que** des informations correspondant à ces moyens peuvent être enregistrées dans un fichier de configuration,
- **que** d'autres moyens pour générer un code source associé à l'interface utilisateur graphique à partir du fichier de configuration sont prévus,
- **que** le code machine exécutable peut être généré sous la forme d'un plugin pour un programme supérieur à partir du code source par des moyens de compilation en lisant et utilisant le fichier de configuration,
- **qu'**après actionnement de moyens pour démarrer le code machine exécutable, l'interface utilisateur graphique est prête à être utilisée pour initialiser ou configurer le variateur,
- et **que** le code machine exécuté sous la forme d'un plugin peut être appelé par le programme supérieur, après le démarrage de ce programme, pour actualiser une version d'un plugin précédemment appelé pour une version précédente de l'interface utilisateur graphique pendant le temps de fonctionnement d'une installation.

6. Système selon la revendication 5,
**caractérisé en ce que**
l'ordinateur est intégré dans le variateur, donc que le boîtier du variateur est aussi le boîtier de l'ordinateur.

7. Système selon la revendication 5,
**caractérisé en ce que**
le procédé selon l'une des revendications 1 à 4 peut être exécuté au moyen de l'ordinateur.
